# EUROPEAN PATENT APPLICATION

(11) **EP 3 829 030 A1**
(43) Date of publication of application: **02.06.2021**
(21) Application number: 19212622.5
(22) Date of filing: 29.11.2019
(51) Int. Cl.: H02K 1/27

(54) **PERMANENT MAGNET MODULE FOR A PERMANENT MAGNET MACHINE**

(71) Applicant: Siemens Gamesa Renewable Energy A/S, 7330 Brande (DK)
(72) Inventor: Andersen, Mads Peter Zippor Leth, 8464 Galten / Skovby (DK); Jacobsen, Bo Nedergaard, 8300 Odder (DK); Shoib, Ahmed Shariff, 570004 Mysore Karnataka (IN)
(74) Representative: Aspacher, Karl-Georg

(57) **Abstract**

A permanent magnet electrical machine (10) includes a plurality of permanent magnet modules (101) arranged around a rotational axis (Y). Each permanent magnet module (101) comprises at least a permanent magnet (200) and a baseplate (301), the baseplate (301) including a base side for attaching the permanent magnet module (101) to the permanent magnet machine (10) and an opposite top side for attaching the permanent magnet (200) to the baseplate (301). The permanent magnet electrical machine (10) further includes at least a spring (401a, 401b, 401c, 401d, 401e) which is active on a respective baseplate (301) for limiting the movement of the respective permanent magnet module (101) along a tangential direction (X) of the permanent magnet electrical machine (10).

## Description

### Field of invention

The present invention relates to the field of permanent magnet machines including permanent magnet modules.

### Art Background

A permanent-magnet electric machine, such as an electric generator installed in a wind turbine, typically comprises a rotor which rotates relative to a stator around a rotational axis. Stator and rotor are separated from each other by an airgap, circumferentially extended around the rotational axis.

In a permanent-magnet electric machine the rotor comprises a plurality of permanent magnets modules, each module including a baseplate and one or more permanent magnets attached to the baseplate. The baseplate is attached to the rotor body, so that, in operation, the baseplate is interposed between the respective magnet and the rotor body.

The permanent magnet modules may be mounted on the rotor so that a certain degree of freedom is allowed for the movement of each permanent magnet module along the tangential direction, i.e. along the direction of rotation of the rotor. The tangential oscillations of the permanent magnet modules may be avoided by fixing them, for example by means of gluing to the rotor body. This would however add costs and complexity to the electric machine.

It is therefore desirable to provide efficient and cost-effective constructional features of permanent magnet machine including permanent magnet modules to control the tangential oscillations of the permanent magnet modules.

### Summary of the Invention

This objective may be solved by the permanent magnet module according to the independent claims. Advantageous embodiments of the present invention are described by the dependent claims.

According to the present invention a permanent magnet electrical machine including a plurality of permanent magnet modules is provided. The permanent magnet modules are arranged around a rotational axis of the permanent magnet electrical machine. Each permanent magnet module comprises at least a permanent magnet and a baseplate, the baseplate including a base side for attaching the permanent magnet module to the permanent magnet machine and an opposite top side for attaching the permanent magnet to the baseplate, wherein the permanent magnet electrical machine further includes at least a spring which is active on a respective baseplate for limiting the movement of the respective permanent magnet module along a tangential direction of the permanent magnet electrical machine.

According to possible embodiments of the invention, the baseplate may include at least a lateral side facing another permanent magnet module of the permanent magnet electrical machine along the tangential direction of the permanent magnet electrical machine, the spring being active on the lateral side. The spring may be included in the baseplate. According to embodiments of the present invention, the spring may be included in the baseplate on a lateral side of the baseplate side facing another permanent magnet module.

Advantageously, the invention proposes the use of one or more springs, which are active on the baseplate for controlling the movement of each permanent magnet module along the tangential direction, i.e. along the direction of rotation of the rotor. The solution would require a different machining of components of the rotor, without involving the use of fixing means, for example glue. This permits to control the tangential movements of the permanent magnet modules without increasing costs and complexity.

According to embodiments of the present invention, the spring is integrated on at least a lateral side of the baseplate in order to provide a greater elasticity at said lateral side with respect to the material of the baseplate. According to possible embodiments of the present invention, this may be obtained by providing one or more deformable elements protruding from a lateral side of the baseplate. The stiffness of the spring may be advantageously controlled by controlling the inclination and/or dimensions of the deformable element.

According to an embodiment of the present invention, the baseplate comprises a slot at said lateral side for promoting deformation of the baseplate at said lateral side. The slot may extend through the slot between the base side and the top side. The slot may extend parallel to said lateral side of the baseplate.

According to an embodiment of the present invention, the baseplate comprises an elastomeric insert, which is active for limiting the movement of the respective permanent magnet module along a tangential direction of the permanent magnet electrical machine.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
Fig. 1 shows a schematic section of a wind turbine including embodiments of the present invention.
Fig. 2 shows a cross-sectional view of a permanent magnet machine including a plurality of permanent magnet modules according to the present invention.
Fig. 3 shows a cross-sectional view of the rotor of the permanent magnet machine of fig. 2.
Fig. 4 shows a top view of a first embodiment of a permanent magnet module according to the present invention.
Fig. 5 shows an enlarged view of the detail V of the embodiment of Fig. 4.
Fig. 6 shows a top view of a second embodiment of a permanent magnet module according to the present invention.
Fig. 7 shows an enlarged view of the detail VII of the embodiment of Fig. 6.
Fig. 8 shows a top view of a third embodiment of a permanent magnet module according to the present invention.
Fig. 9 shows a top view of a fourth embodiment of a permanent magnet module according to the present invention.
Fig. 10 shows a top view of a fifth embodiment of a permanent magnet module according to the present invention.
Fig. 11 shows an enlarged view of the detail XI of the embodiment of Fig. 10.

### Detailed Description

The illustrations in the drawings are schematically. It is noted that in different figures, similar or identical elements are provided with the same reference signs.

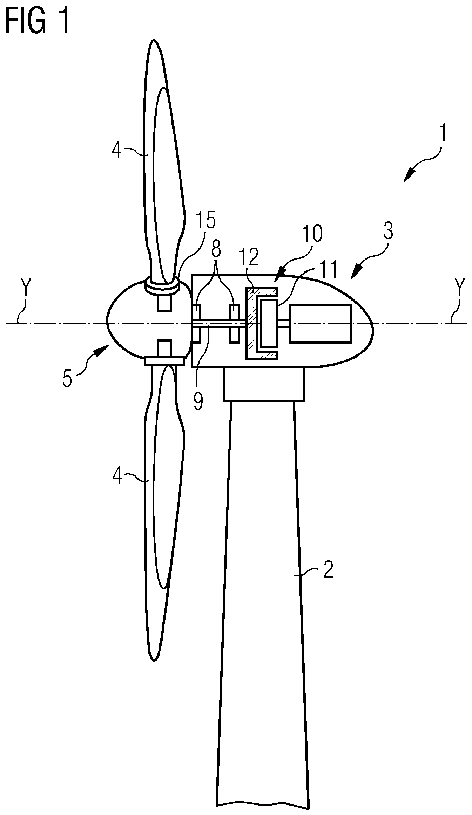

**Figure 1** shows a partial cross-sectional view of a wind turbine 1 including a permanent magnet machine 10, i.e. an electrical generator, which includes a permanent magnet module according to the invention. The permanent magnet machine 10 includes a stator 11 and a rotor 12. The rotor 12 is rotatable with respect to the stator 11 about a longitudinal axis of the permanent magnet machine 10. The terms axial, radial and circumferential in the following are to be intended with reference to the longitudinal axis Y of rotation of the permanent magnet machine 10. In the embodiment of Figure 1, the rotor 12 is radially external with respect the stator 11 and rotatable about the longitudinal axis Y. A circumferential air gap is provided between the stator 11 and the rotor 12. According to other possible embodiments of the present invention (not represented in the attached figures), the rotor 12 is radially internal with respect the stator 11 and rotatable about the longitudinal axis Y. The permanent magnet machine 10 may be a fractional slot concentrated winding electrical generator.

According to other possible embodiments of the present invention (not represented in the attached figures), the present invention may be applied to any type of permanent magnet electric machines, e.g. radial, axial, etc. The present invention may be applied also to integral-slot electric permanent magnet machine.

A plurality of permanent magnets modules (not visible in Figure 1) is attached to the rotor 12 by means of respective baseplates, as detailed in the following. According to other possible embodiments of the present invention (not represented in the attached figures), a plurality of permanent magnets modules may be attached to the stator of a permanent magnet machine.

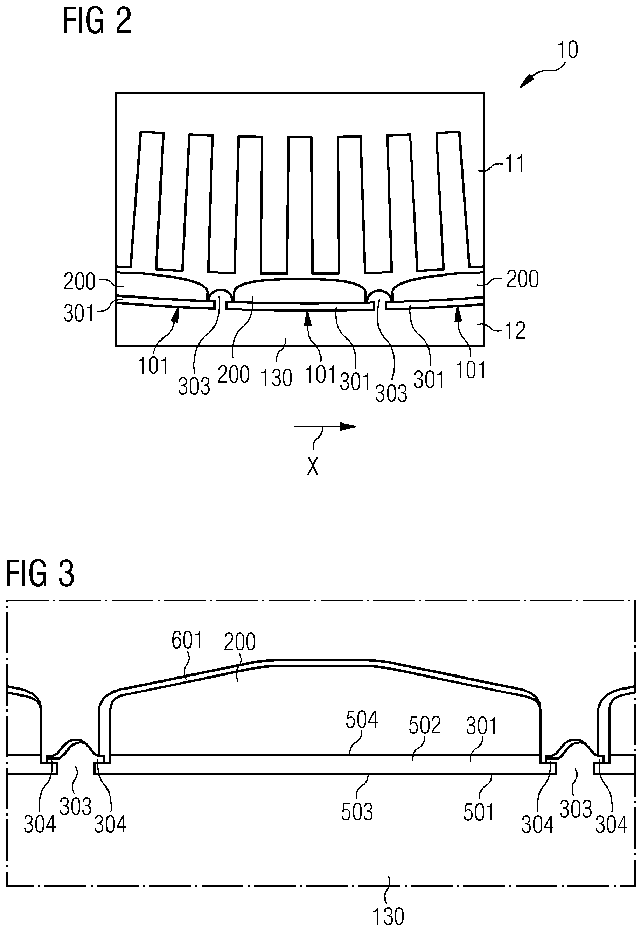

**Figure 2** shows a partial cross-sectional view of the permanent magnet machine 10 including a plurality of permanent magnet modules 101 attached to the rotor 12. The permanent magnet modules 101 are attached to a side of the rotor 12 which faces the stator 11. Each permanent magnet module 101 comprises a permanent magnet 200 and a baseplate 301. According to other embodiment of the present invention (not shown), each permanent magnet module 101 may comprise more than one permanent magnet 200 and more than one baseplate 301. Each of the permanent magnets 200 is attached to a rotor body 130 of the rotor 12 by means of the respective base plate 301. The permanent magnet modules 101 are distributed about the longitudinal axis Y in such a way that a plurality of tangential gaps is provided between the permanent magnet modules 101. Each tangential gap is tangentially provided between two tangentially adjacent permanent magnet modules 101. At each tangential gap a radial protrusion 303 is provided, which radially protrudes from the rotor body 130 towards the longitudinal axis Y. The radial protrusion 303 is T-shaped and comprises at its radial end two opposite circumferential fins 304. Each fin 304 radially interferes with a respective baseplate 301 for radially holding a respective permanent magnet module 101 in contact with the rotor body 130. Each permanent magnet module 101 may be further radially maintained in contact with the rotor body 130 by means of the radial magnetic force establishing between the respective permanent magnet 200 and the rotor body 130. Each permanent magnet modules 101 is free to move with respect to the rotor body 130 between two respective radial protrusion 303 along a tangential direction X, i.e. along the direction of rotation of the rotor 12.

**Figure 3** shows a partial cross-sectional view of the rotor 12 including a plurality of permanent magnet modules 101 (three permanent magnet modules 101 are visible in figure 3). The baseplate 301 includes a first portion 501 a base side 503 for attaching the permanent magnet module 101 to the rotor body 130 and a second portion 502 radially adjacent and attached to the first portion 501. The second portion 502 provides a top side 504, radially opposite to the base side 503 for attaching the permanent magnet 200 to the baseplate 301, for example by gluing or other fixing means. In the tangential direction the first portion 501 is larger than the second portion 502, a step being provided therebetween where the circumferential fins 304 are active for radially holding the permanent magnet module 101 in contact with the rotor body 130. According to other embodiments of the present invention (not shown), only the baseplate 301 includes only the first portion, where both the base side 503 and the top side 504 are provided. The permanent magnet modules 101 includes a cover 601 covering the permanent magnet 200. The cover 601 may be welded to the first portion 501 or to the second portion 502 of the baseplate 301.

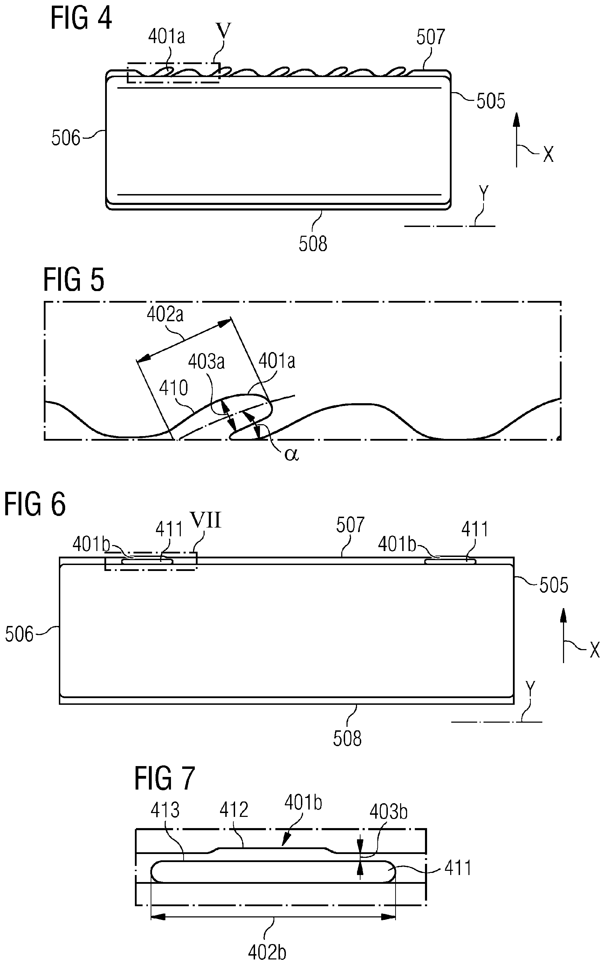

With reference to the embodiments of **Figures 4** to **11****,** the first portion 501 of the baseplate 301 has the shape of a parallelepiped having two radially opposite major faces, one of which is the base side 503 for attaching the permanent magnet module 101 to the rotor body 130. The first portion 501 further include two axially opposite front and rear sides 505, 506 and two circumferentially opposite lateral sides 507, 508. On at least one of the two circumferentially opposite lateral sides 507, 508 a spring 401a, 401b, 401c, 401d, 401e is provided which is active on the respective baseplate 301 for limiting the movement of the respective permanent magnet module 101 along the tangential direction X of the permanent magnet electrical machine 10. For limiting the movement of the respective permanent magnet module 101 along the circumferential direction X the spring 401a, 401b, 401c, 401d, 401e may be active on the radial protrusion 303. According to possible alternative embodiments (not shown) of the present invention where the radial protrusion 303, the spring 401a, 401b, 401c, 401d, 401e may be directly active between two circumferentially adjacent permanent magnet modules 101. According to other possible alternative embodiments (not shown) of the present invention, the spring 401a, 401b, 401c, 401d, 401e may be active between the baseplate 301 and a counterpart element provided on the rotor 12. The spring 401a, 401b, 401c, 401d, 401e provides a greater elasticity at least at one of the lateral sides 507, 508 with respect to the material of the baseplate 301.

With reference to the embodiment of **Figures 4** and **5****,** the spring 401a is performed through a deformable finger 410 provided on the baseplate 301. The finger 410 protrudes from the lateral sides 507 according to a protrusion direction which is inclined of an angle α with respect to the longitudinal axis Y. The angle α may be comprised between 0 and 90 degrees. The stiffness of the spring 401a is controlled by controlling any of the value of the angle α and of the dimensions 402a, 403a of the finger, respectively parallel and transversal to the protrusion direction.

With reference to the embodiment of **Figures 6** and **7****,** the spring 401b is performed by providing on the baseplate 301 at least one slot 411 (two slots 411 are shown in figure 6) parallel to the lateral sides 507 and an abutment 412 provided along the slot 411 and protruding from the lateral sides 507. The abutment 412 is subject to abut against a respective radial protrusion 303, thus deforming in the circumferential direction X a deformable portion 413 of the baseplate 301 comprised between the lateral sides 507 and the slot 411. The stiffness of the spring 401a is controlled by controlling any of the length 402b of the deformable portion 413 (and of the slot 411), of the thickness 403b of the deformable portion 413 and of the dimensions of the abutment 412.

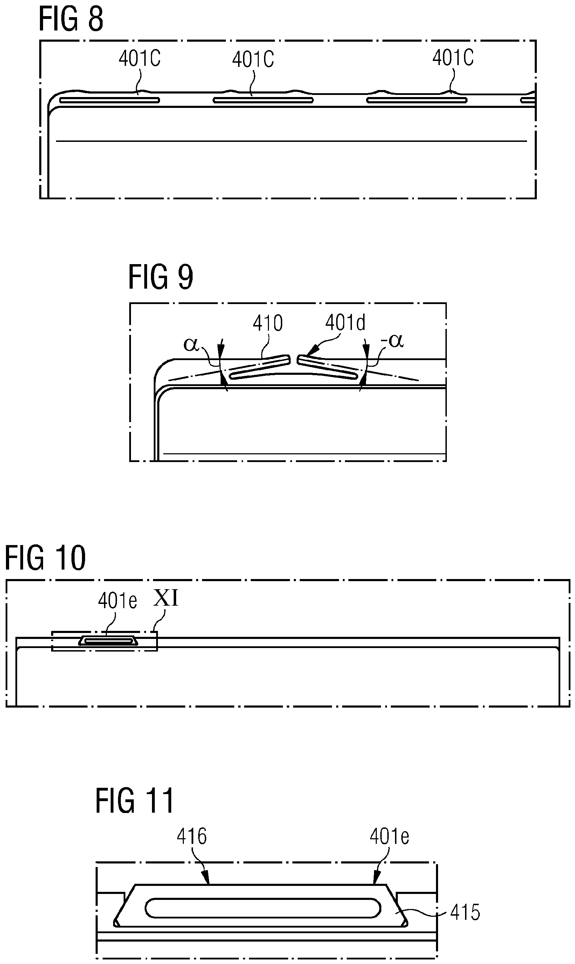

With reference to the embodiment of **Figure 8****,** the spring 401c is similar to the spring 401b of the previous embodiment, with the difference that three abutments 412 are provided for each spring 401c, respectively two abutments 412 protruding outside from the lateral sides 507 and one abutments 412 protruding inside from deformable portion 413 towards the slot 411.

With reference to the embodiment of **Figure 9****,** the spring 401d is similar to the spring 401a of the first embodiment, with the only difference that two deformable fingers 410 are provided on the baseplate 301 opposite to each other, i.e. one finger 410 protrudes from the lateral sides 507 according to a protrusion direction which is inclined of an angle α with respect to the longitudinal axis Y and the other opposite finger 410 protrudes from the lateral sides 507 according to a protrusion direction which is inclined of an angle -α with respect to the longitudinal axis Y.

With reference to the embodiment of **Figures 10** and **11****,** the spring 401e is performed by providing on the baseplate 301 at least one recess 415 (one recess 411 are shown in figure 10) opening on the lateral side 507, where an elastomeric insert 416 is housed. The abutment elastomeric insert 416 is subject to protrude from the lateral side 507 for abutting against a respective radial protrusion 303, thus deforming itself in the circumferential direction X. The stiffness of the spring 401e is controlled by controlling any of the dimensions of the recess 415 and of the elastomeric insert 416.

According to other embodiment of the invention (not shown), the spring may be an element interposed between the baseplate 301 and a counterpart element provided on the rotor 12. For example, an external spring may be interposed between the baseplate and one adjacent radial protrusion. According to other embodiment of the invention (not shown), the spring may be integrated in the rotor body 130, for example being a part of the radial protrusion 303.

## Claims

1. A permanent magnet electrical machine (10) including a plurality of permanent magnet modules (101) arranged around a rotational axis (Y) of the permanent magnet electrical machine (10), each permanent magnet module (101) comprising at least a permanent magnet (200) and a baseplate (301), the baseplate (301) including a base side (503) for attaching the permanent magnet module (101) to the permanent magnet machine (10) and an opposite top side (504) for attaching the permanent magnet (200) to the baseplate (301), wherein the permanent magnet electrical machine (10) further includes at least a spring (401a, 401b, 401c, 401d, 401e) which is active on a respective baseplate (301) for limiting the movement of the respective permanent magnet module (101) along a tangential direction (X) of the permanent magnet electrical machine (10) .

2. The permanent magnet electrical machine (10) according to claim 1, wherein the baseplate (301) includes at least a lateral side facing another permanent magnet module (101) of the permanent magnet electrical machine (10) along the tangential direction (X) of the permanent magnet electrical machine (10), the spring (401a, 401b, 401c, 401d, 401e) being active on the lateral side.

3. A permanent magnet module (101) for a permanent magnet electrical machine (10), the permanent magnet module (101) comprising at least a permanent magnet (200) and a baseplate (301), the baseplate (301) including a base side for attaching the permanent magnet module (101) to the permanent magnet machine (10) and an opposite top side for attaching the permanent magnet (200) to the baseplate (301), wherein the baseplate (301) further includes at least a spring (401a, 401b, 401c, 401d, 401e) for limiting the movement of the permanent magnet module (101) along a tangential direction (X) of the permanent magnet electrical machine (10).

4. The permanent magnet module (102) according to claim 3, wherein the spring (401a, 401b, 401c, 401d, 401e) is integrated on at least a lateral side of the baseplate (301), said lateral side (507) having a greater elasticity with respect to the material of the baseplate.

5. The permanent magnet module (102) according to claim 3 or 4, wherein the spring (401a, 401b, 401c, 401d, 401e) includes at least one deformable element (410, 412, 416) protruding from a lateral side (507) of the baseplate (301).

6. The permanent magnet module (102) according to claim 5, wherein the stiffness of the spring (401a, 401b, 401c, 401d, 401e) is controlled by controlling the inclination (α) and/or dimensions of the deformable element (410, 412, 416).

7. The permanent magnet module (102) according to any of the claims 4 to 6, wherein the baseplate (301) comprises a slot (411) at said lateral side for promoting deformation of the baseplate at said lateral side.

8. The permanent magnet module (102) according to claim 7, wherein the slot extends through the slot (301) between the base side and the top side.

9. The permanent magnet module (102) according to claim 8, wherein the slot extends along an axis parallel to said lateral side of the baseplate.

10. The permanent magnet module (102) according to any of the claims 4 to 6, wherein the baseplate (301) comprises an elastomeric insert (416).
